(19) Europäisches Patentamt
European Patent Office
Office européen des brevets

(11) **EP 4 142 034 B1**

(12) **EUROPEAN PATENT SPECIFICATION**

(45) Date of publication and mention
of the grant of the patent:
**05.08.2026 Bulletin 2026/32**

(21) Application number: **21833718.6**

(22) Date of filing: **30.06.2021**

(51) International Patent Classification (IPC):
$H01M\ 50/403^{(2021.01)}$  $H01M\ 50/449^{(2021.01)}$
$H01M\ 50/446^{(2021.01)}$  $H01M\ 10/052^{(2010.01)}$
$B05C\ 5/02^{(2006.01)}$  $B05D\ 7/04^{(2006.01)}$
$B05C\ 9/04^{(2006.01)}$  $H01M\ 50/414^{(2021.01)}$
$H01M\ 50/429^{(2021.01)}$  $H01M\ 50/443^{(2021.01)}$
$H01M\ 50/451^{(2021.01)}$  $H01M\ 50/457^{(2021.01)}$
$H01M\ 50/489^{(2021.01)}$

(52) Cooperative Patent Classification (CPC):
**H01M 50/403; H01M 50/414; H01M 50/429;
H01M 50/443; H01M 50/446; H01M 50/451;
H01M 50/457; H01M 50/489;** B05C 5/0245;
B05C 9/04; Y02E 60/10

(86) International application number:
**PCT/KR2021/008302**

(87) International publication number:
**WO 2022/005213 (06.01.2022 Gazette 2022/01)**

(54) **METHOD AND APPARATUS FOR MANUFACTURING SEPARATOR, AND SEPARATOR
MANUFACTURED THEREBY**

VERFAHREN UND VORRICHTUNG ZUR HERSTELLUNG EINES SEPARATORS UND SO
HERGESTELLTER SEPARATOR

PROCÉDÉ ET APPAREIL DE FABRICATION DE SÉPARATEUR ET SÉPARATEUR AINSI
FABRIQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2020 KR 20200081079**

(43) Date of publication of application:
**01.03.2023 Bulletin 2023/09**

(73) Proprietor: **LG Energy Solution, Ltd.
Seoul 07335 (KR)**

(72) Inventors:
• **KIM, Young-Bok**
**Daejeon 34122 (KR)**
• **LEE, Jong-Yoon**
**Daejeon 34122 (KR)**
• **SUNG, Dong-Wook**
**Daejeon 34122 (KR)**

(74) Representative: **Hoffmann Eitle
Patent- und Rechtsanwälte PartmbB
Arabellastraße 30
81925 München (DE)**

(56) References cited:
EP-A1- 3 457 461       JP-A- 2013 511 818
JP-A- 2014 500 589     KR-A- 20130 052 526
KR-A- 20160 106 521    KR-A- 20190 067 124
US-A1- 2013 287 937    US-A1- 2015 380 702

**Description**

TECHNICAL FIELD

The present disclosure relates to a method and apparatus for manufacturing a separator applicable to an electrochemical device, such as a lithium secondary battery, and a separator obtained thereby.

The present application claims priority to Korean Patent Application No. 10-2020-0081079 filed on July 1, 2020 in the Republic of Korea.

BACKGROUND ART

A lithium secondary battery includes a separator interposed between a positive electrode and a negative electrode in order to prevent a physical contact and electrical short-circuit between the positive electrode and the negative electrode. Such a separator frequently uses a polyolefin-based porous polymer substrate. In addition, a separator provided with a porous coating layer, including inorganic particles and a binder polymer, on at least one surface of a porous polymer substrate has been used frequently in order to prevent the heat shrinkage of the porous polymer substrate and to increase the adhesion to an electrode.

Herein, the methods for coating the porous coating layer onto the porous polymer substrate may be classified broadly into the following two methods depending on time interval in coating both surfaces of the substrate: a simultaneous coating method (e.g. dip coating) of coating both surfaces of the porous polymer substrate at the same time with no time interval, and a sequential coating method (e.g. slot die coating) of coating one surface of the porous polymer substrate and then the other surface thereof with a predetermined time interval.

Herein, the simultaneous coating method is advantageous in that slurry for forming a porous coating layer is applied to both surfaces of the porous polymer substrate at the same time, and thus there is a small deviation in physical properties between the porous coating layers coated on the porous polymer substrate. However, such a simultaneous coating method has a limitation in production rate and requires a large space, and thus use of the method has been decreased recently.

To increase the production rate and to improve the space efficiency, a sequential coating method has been used recently. However, in the case of the sequential coating method, the porous coating layer is applied onto one surface of the porous polymer substrate separately from the other surface thereof. Therefore, there is a deviation in physical properties between the formed porous coating layers. When the top surface of the porous polymer substate shows physical properties different from the physical properties of the back surface, defected products are produced during a battery assemblage process.

Under these circumstances, the present disclosure is directed to providing a method for reducing a deviation in physical properties between porous coating layers formed when coating both surfaces of a porous polymer substrate with a time interval.

US 2015/0380702 A1 describes a method for manufacturing a separator including preparing a porous substrate having pores, coating at least one surface of the porous substrate with a first solvent, coating the first solvent with a slurry containing inorganic particles dispersed therein and formed by dissolving a binder polymer in a second solvent, drying the first and second solvents simultaneously to form a porous organic-inorganic composite layer on the porous substrate.

US 2013/0287937 A1 concerns a multi-layer composite porous film and a manufacturing method thereof.

EP 3 457 461 A1 relates to an organic/inorganic composite separator including a porous substrate having a plurality of pores; and a porous coating layer formed on at least one surface of the porous substrate with a plurality of inorganic particles and a binder polymer.

DISCLOSURE

Technical Problem

The present disclosure is designed to solve the problems of the related art, and therefore the present disclosure is directed to providing a separator which shows a significantly reduced deviation in physical properties between both surfaces of a porous polymer substrate and causes no problem of generation of defected products during the subsequent battery assemblage process.

The present disclosure is directed to providing a method for manufacturing a separator which shows a reduced deviation in physical properties between the porous coating layers formed on both surfaces of a porous polymer substrate.

In addition, the present disclosure is directed to providing an apparatus for manufacturing a separator through the above-mentioned method.

Technical Solution

In one aspect of the present disclosure, there is provided method for manufacturing a porous separator according to any one of the following embodiments.

According to a first embodiment, there is provided a method for manufacturing a porous separator for a lithium secondary battery, including the steps of:

(S1) applying a solvent for pore impregnation onto one surface of a porous polymer substrate;
(S2) applying slurry for forming a porous coating layer, including inorganic particles, an organic solvent and a binder polymer soluble in the organic solvent, onto the other surface of the porous polymer substrate;
(S3) applying the slurry for forming a porous coating layer onto the surface of the porous substrate mentioned in step (S1); wherein step (S2) and step (S3) are carried out sequentially with a time interval; and
(S4) drying the product of step (S3) to obtain a porous separator provided with a first porous coating layer on one surface of the porous polymer substrate and a second porous coating layer on the other surface of the porous polymer substrate;
the porous separator for a lithium secondary battery comprises:

a porous polymer substrate;
a first porous coating layer formed on one surface of the porous polymer substrate and comprising inorganic particles and a binder polymer; and
a second porous coating layer formed on the other surface of the porous polymer substrate and comprising the inorganic particles and the binder polymer,
wherein the first porous coating layer and the second porous coating layer show a deviation in physical property of ±100 gf/15 mm in terms of peel strength, and
the first porous coating layer and the second porous coating layer show a deviation in physical property of ±50 gf/25 mm in terms of lamination strength.
1 gf/15 mm corresponds to 0.6538 N/m and 1 gf/25mm corresponds to 0.392 N/m.

According to the second embodiment, there is provided the method for manufacturing the porous separator as defined in the first embodiment, wherein the applying step is carried out through a single-side coating process.

According to the third embodiment, there is provided the method for manufacturing the porous separator as defined in the second embodiment, wherein the single-side coating process is carried out by using a slot die coater, a spray coater, a gravure roll coater or a DM coater.

According to the fourth embodiment, there is provided the method for manufacturing the porous separator as defined in any one of the first to third embodiments, wherein the solvent for pore impregnation is the same as the organic solvent, or is miscible with the binder polymer and has a low boiling point.

According to the fifth embodiment, there is provided the method for manufacturing the porous separator as defined in any one of the second to fourth embodiments, wherein the solvent for pore impregnation has a boiling point lower than the melting point of the porous polymer substrate.

According to the sixth embodiment, there is provided the method for manufacturing the porous separator as defined in the fifth embodiment, wherein the solvent for pore impregnation has a boiling point of 10°C or higher and 300°C or lower.

According to the seventh embodiment, there is provided the method for manufacturing the porous separator as defined in the fifth embodiment, wherein the solvent for pore impregnation includes acetone, methyl ethyl ketone, tetrahydrofuran, methyl isobutyl ketone, dimethyl sulfoxide, 1-methyl-2-pyrrolidone, dimethyl formamide, or two or more of them.

According to the eighth embodiment, there is provided the method for manufacturing the porous separator as defined in any one of the first to the seventh embodiments, wherein the organic solvent includes any one compound selected from acetone, tetrahydrofuran, methylene chloride, chloroform, dimethyl formamide, N-methyl-2-pyrrolidone, methyl ethyl ketone and cyclohexane, or a mixture of two or more of them.

According to the ninth embodiment, there is provided the method for manufacturing the porous separator as defined in any one of the first to the eighth embodiments, wherein step (S1) includes applying the solvent for pore impregnation to the inside of the pores of the porous polymer substrate.

According to the tenth embodiment, there is provided the method for manufacturing the porous separator as defined in any one of the first to the ninth embodiments, wherein step (S4) includes drying the solvent for pore impregnation and the organic solvent.

According to the eleventh embodiment, there is provided the method for manufacturing the porous separator as defined in any one of the first to the tenth embodiments, wherein the solid content (content of the solute free from the solvent) in the slurry for forming a porous coating layer is 30 wt% or less based on 100 wt% of the slurry for forming a porous coating layer.

According to the twelfth embodiment, there is provided the method for manufacturing the porous separator as defined in any one of the first to the eleventh embodiments, wherein each of the drying steps is carried out independently under a relative humidity of 20-80%.

According to the thirteenth embodiment, there is provided the method for manufacturing the porous separator as defined in any one of the first to the twelfth embodiments, wherein the slurry for forming a porous coating layer in step (S2) has the same composition as the composition of the slurry for forming a porous coating layer in step (S3).

**In** still another aspect of the present disclosure, there is provided a separator coating apparatus according to the following embodiment.

According to the fourteenth embodiment, there is provided a separator coating apparatus for carrying out the method for manufacturing the separator as defined in any one of the first to the thirteenth embodiments, including:

(a) a porous polymer substrate-supplying roll configured to supply a porous polymer substrate;
(b) a solvent for pore impregnation-applying unit configured to apply a solvent for pore impregnation onto one surface of the porous polymer substrate;
(c) a first coating unit configured to apply slurry for forming a porous coating layer onto the other surface of the porous polymer substrate;
(d) a second coating unit configured to apply slurry for forming a porous coating layer onto the surface of the porous polymer substrate mentioned in (b);
(e) two or more rotating rollers configured to transport the separator by frictional force, while they are in contact with at least one surface of the porous polymer substrate; and
(f) a drying unit configured to dry the porous polymer substrate with two porous coating layers coated on both surfaces thereof.

## Advantageous Effects

According to an embodiment of the present disclosure, there is provided a method for manufacturing a separator which shows a small deviation in physical properties between the porous coating layer formed on the top surface of a porous polymer substrate and the porous coating layer formed on the back surface of the porous polymer substrate.

There is also provided a method for manufacturing a separator which reduces a deviation in physical properties between the porous coating layers. Particularly, it is possible to provide a method for manufacturing a separator which shows a small deviation in physical properties between the porous coating layers by applying a solvent for pore impregnation onto one surface of the porous polymer substrate so that the pores in the porous polymer substrate may be impregnated with the solvent, coating both surfaces of the porous polymer substrate with a time interval, and drying the porous coating layers at once.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the apparatus for manufacturing a separator for a lithium secondary battery based on the conventional sequential coating process.
FIG. 2 is a schematic view illustrating the apparatus for manufacturing a separator for a lithium secondary battery according to an embodiment of the present disclosure.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In an electrochemical device, such as a lithium secondary battery, a separator prevents a physical contact and electrical short-circuit between a positive electrode and a negative electrode. Such a separator frequently uses a polyolefin-based porous polymer substrate. In addition, a separator provided with a porous coating layer, including inorganic particles and a binder polymer, on at least one surface of a porous polymer substrate has been used frequently in order to prevent the heat shrinkage of the porous polymer substrate and to increase the adhesion to an electrode.

The methods for forming the porous coating layer may be classified broadly into a simultaneous coating method and a sequential coating method. Recently, the porous coating layer has been applied onto the porous polymer substrate mainly through the sequential coating method, since the simultaneous coating method shows a low production rate and low space efficiency.

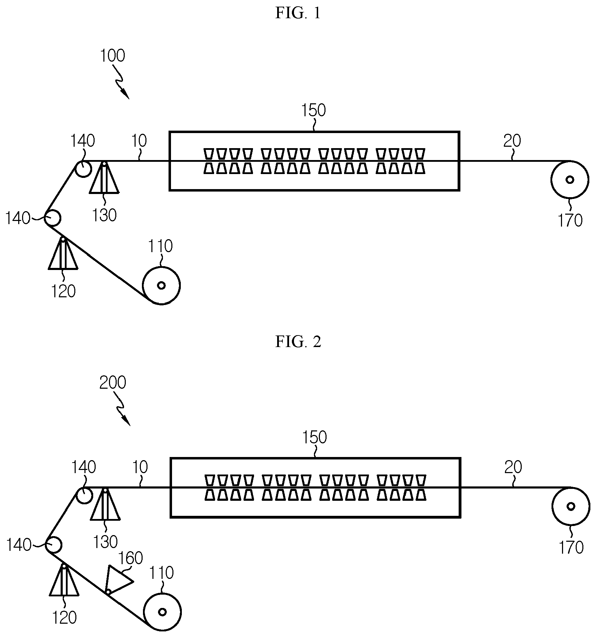

FIG. 1 is a schematic view illustrating the apparatus 100 for manufacturing a separator for a lithium secondary battery based on the conventional sequential coating process. Referring to FIG. 1, the apparatus 100 for manufacturing a separator for a lithium secondary battery according to the related art includes a porous polymer substrate-supplying roll 110 configured to supply a porous polymer substrate 10, a first porous coating layer-coating unit 120 configured to carry out coating with a first porous coating layer, a second porous coating layer-coating unit 130 configured to carry out coating with a second porous coating layer, a rotating roller 140, and a drying unit 150. The sequential coating process using the apparatus is problematic in that since a porous coating layer is coated first on one surface of the porous polymer substrate, and then a porous coating layer is coated on the other surface of the porous polymer substrate, there is a deviation in physical properties between the porous coating layer formed on the top surface of the porous polymer substrate and the porous coating layer formed on the back surface thereof.

The inventors of the present disclosure have conducted intensive studies to provide a separator capable of solving the above-mentioned problem, and a method and apparatus for manufacturing the same.

The porous separator obtained by the method according to the present invention is described below.

Particularly, there is provided a porous separator for a lithium secondary battery, including:

a porous polymer substrate;
a first porous coating layer formed on one surface of the porous polymer substrate and including inorganic particles and a binder polymer; and
a second porous coating layer formed on the other surface of the porous polymer substrate and including the inorganic particles and the binder polymer,
wherein the first porous coating layer and the second porous coating layer show a deviation in physical property of ±100 gf/15 mm in terms of peel strength, and
the first porous coating layer and the second porous coating layer show a deviation in physical property of ±50 gf/25 mm in terms of lamination strength.

Herein, the adhesion between the porous polymer substrate and the porous coating layer is referred to as peel strength (Ps), and the adhesion between an electrode and the outermost surface (porous coating layer in the case of the present disclosure) facing the electrode is referred to as lamination strength (Ls).

Herein, peel strength may be determined as follows. A separator is cut into a size of 15 mm X 100 mm. A double-sided adhesive tape is attached to a glass plate, and the porous coating layer surface of the separator is attached to the adhesive tape. Then, the end portion of the separator is mounted to a UTM instrument (LLOYD Instrument LF Plus), and force is applied at 180° and a rate of 300 mm/min. The force required for separating the porous coating layer from the porous polymer substrate is measured.

The term 'deviation in physical property in terms of peel strength' refers to the difference between 'the peel strength between the second porous coating layer and the porous polymer substrate' and 'the peel strength between the first porous coating layer and the porous polymer substrate', and may be calculated according to the following formula:

Deviation in physical property in terms of peel strength = (Peel strength between the second porous coating layer and the porous polymer substrate) - (Peel strength between the first porous coating layer and the porous polymer substrate)

The lamination strength may be determined as follows. A separator is cut into a size of 25 mm x 100 mm. The separator is stacked with an electrode, and the stack is inserted between PET films having a thickness of 100 μm and adhered by using a flat press. Herein, the flat press is heated and pressurized at 60°C under a pressure of 6.5 MPa for 1 second. The end portion of the separator adhered to the electrode is mounted to a UTM instrument (LLOYD Instrument LF Plus), and force is applied at 180° and a rate of 300 mm/min. The force required for separating the electrode from the outermost surface (porous coating layer in the case of the present disclosure) facing the electrode is measured. Herein, the electrode may be a negative electrode or a positive electrode.

The term 'deviation in physical property in terms of lamination strength' refers to the difference between 'the bond strength between the second porous coating layer and the electrode facing the second porous coating layer' and 'the bond strength between the first porous coating layer and the electrode facing the first porous coating layer', and may be calculated according to the following formula:

Deviation in physical property in terms of lamination strength = (Bond strength between the second porous coating layer and electrode) - (Bond strength between the first porous coating layer and electrode)

Although the thickness of the porous coating layer is not particularly limited, it may be 1-15 $\mu$m, particularly 1.5-10 $\mu$m. In addition, the porosity of the porous coating layer is not particularly limited, but it may be 35-85%, preferably.

Particularly, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

Although there is no particular limitation in the thickness of the porous polymer substrate, it has a thickness of 1-100 $\mu$m, particularly 5-50 $\mu$m. In addition, although there is no particular limitation in the size of the pores present in the porous polymer substrate and porosity, the pore size and porosity may be 0.01-50 $\mu$m and 20-75%, respectively.

There is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li$^+$) of operating voltage of an applicable electrochemical device. Particularly, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, inorganic particles having lithium-ion transportability or a combination thereof.

The inorganic particles having a dielectric constant of 5 or more may be any one selected from the group consisting of $Al_2O_3$, $SiO_2$, $ZrO_2$, $AlO(OH)$, $TiO_2$, $BaTiO_3$, $Pb(Zr_xT1_{1-x})O_3$ (PZT, wherein $0 < x < 1$), $Pb_{1-x}La_xZr_{1-y}TiO_3$ (PLZT, wherein $0 < x < 1$, $0 < y < 1$), $(1-x)Pb(Mg_{1/2}Nb_{2/3})O_{3-x}PbTiO_3$ (PMN-PT, wherein $0 < x < 1$), hafnia ($HfO_2$), $SrTiO_3$, $SnO_2$, $CeO_2$, $MgO$, $NiO$, $CaO$, $ZnO$, $ZO_3$ and $SiC$, or a mixture of two or more of them.

The inorganic particles having lithium ion transportability may be any one selected from the group consisting of include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$-based glass ($Li_xSi_yS_z$, $0 < x < 3$, $0 < y < 2$, $0 < z < 4$) and $P_2S_5$-based glass ($Li_xP_yS_z$, $0 < x < 3$, $0 < y < 3$, $0 < z < 7$), or a mixture of two or more of them.

In addition, there is no particular limitation in the average particle diameter of the inorganic particles. However, the inorganic particles preferably have an average particle diameter of 0.001-10 $\mu$m in order to form a coating layer with a uniform thickness and to provide suitable porosity. The average particle diameter of the inorganic particles may be preferably 100 nm to 2 $\mu$m, more preferably 150 nm to 1 $\mu$m.

The binder polymer used for forming a porous coating layer has a high solubility to the solvent used therefor. For example, the binder polymer has a solubility of 5 wt% or more based on the organic solvent. With reference to the binder polymer used according to the present disclosure, the effects of the present can be clearly expressed only when the binder polymer is dissolved in the organic solvent , since the solvent for pore impregnation is applied in advance in order to prevent the binder polymer from being dissolved in the organic solvent and from infiltrating into the porous polymer substrate.

Any binder polymer used generally for forming a porous coating layer in the art may be used with no particular limitation, except that it satisfies the above description about solubility. Particularly, a polymer having a glass transition temperature ($T_g$) of - 200 to 200°C may be used. This is because such a binder polymer can improve the mechanical properties, such as flexibility and elasticity, of the finally formed porous coating layer. Such a binder polymer functions as a binder which connects and stably fixes the inorganic particles with each other, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 $MPa^{1/2}$ or 15-25 $MPa^{1/2}$ and 30-45 $MPa^{1/2}$. Therefore, hydrophilic polymers having many polar groups may be used more frequently as compared to hydrophobic polymers, such as polyolefins. When the solubility parameter is less than 15 $MPa^{1/2}$ and more than 45 $MPa^{1/2}$, it is difficult for the binder polymer to be swelled with a conventional liquid electrolyte for a battery.

Non-limiting examples of the binder polymer may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyviny1 pyrro1idone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethy1polyvinyla1-cho1, cyanoethyl cellulose, cyanoethyl sucrose, pullulan, and carboxymethyl cellulose.

In another aspect of the present disclosure, there is provided a method for manufacturing a porous separator which shows a small deviation in physical properties in terms of peel strength and lamination strength.

According to an embodiment of the present disclosure, there is provided a method for manufacturing a porous separator, including the steps of:

(S1) applying a solvent for pore impregnation onto one surface of a porous polymer substrate;

(S2) applying slurry for forming a porous coating layer, including inorganic particles, an organic solvent and a binder polymer soluble in the organic solvent, onto the other surface of the porous polymer substrate;

(S3) applying the slurry for forming a porous coating layer onto the surface of the porous substrate mentioned in step (S1); wherein step (S2) and step (S3) are carried out sequentially with a time interval; and

(S4) drying the product of step (S3) to obtain a porous separator provided with a first porous coating layer on one surface of the porous polymer substrate and a second porous coating layer on the other surface of the porous polymer substrate; wherein the porous separator is as described above.

Hereinafter, the method will be explained in more detail.

First, a solvent for pore impregnation is applied onto one surface of a porous polymer substrate so that the inside of the pores of the porous polymer substrate may be impregnated with the solvent for pore impregnation (S1).

According to the related art, slurry for forming a porous coating layer is applied directly onto one surface of the porous polymer substrate, and then slurry for forming a porous coating layer is applied immediately onto the other surface of the porous polymer substrate. The inventors of the present disclosure have found a problem occurring in this case. The problem is that the binder polymer in the slurry infiltrates first into the pores of the porous polymer substrate, and causes a difference as compared to the content of the binder polymer in the slurry for forming a porous coating layer applied to the other surface subsequently. It is thought that this is because the binder polymer in the slurry for forming a porous coating layer is sucked first into the surface of the porous polymer substrate coated earlier to cause a difference in amount of the binder polymer in the slurry to be coated. As a result, a problem is generated in that there is a difference in physical properties between one surface (e.g. top surface) and the other surface (e.g. back surface) of the porous polymer substrate.

On the contrary, according to an embodiment of the present disclosure, a solvent for pore impregnation is applied first onto the porous polymer substrate. Therefore, the inside of the pores of the porous polymer substrate is impregnated with the solvent for pore impregnation. Particularly, even when the solvent for pore impregnation is applied onto one surface of the porous polymer substrate, the solvent for pore impregnation does not infiltrate merely into the pores near the above-mentioned one surface of the porous polymer substrate but infiltrates into the pores present throughout the whole porous polymer substrate. Therefore, even when slurry for forming a porous coating layer is applied onto the porous polymer substrate, a smaller amount of the binder polymer in the slurry infiltrates into the pores of the porous polymer substrate. As a result, it is possible to reduce a deviation in physical properties between the first porous coating layer and the second porous coating layer.

The application is carried out by a sequential coating process. For example, the application may be carried out by using a slot die coater, a spray coater, a gravure roll coater or a DM coater. The sequential coating process is advantageous in that a solution for pore impregnation may be supplied in an amount merely required for impregnating the inside of the pores of the porous polymer substrate with the solution, as compared to the simultaneous coating process. In other words, it is important to control the amount of the solvent for pore impregnation infiltrating into the pores of the porous polymer substrate in order to reduce a deviation in physical properties between the first porous coating layer and the second porous coating layer. Particularly, it is preferred to control the amount of the solvent for pore impregnation to an amount with which the pores of the porous polymer substrate are filled. However, a typical example of simultaneous coating processes, i.e. a dip coating process is problematic in that it cannot control the amount as mentioned above. Meanwhile, the sequential coating process is less limited in space as compared to the dip coating process as a typical example of simultaneous coating processes and may be designed with a longer drying zone, and thus can provide a high coating rate and improved productivity in terms of time and cost efficiency.

Herein, the slot die coating process includes forming coating beads from a coating solution supplied through a slot die between a die lip and a porous polymer substrate, and coating the coating beads onto the porous polymer substrate. Particularly, the slot die coating process includes coating the whole surface of a substrate with the composition supplied through the slot die and is advantageous in that it can control the thickness of a coating layer depending on the flux supplied from a metering pump.

The spray coating process includes spraying and applying a coating solution onto the porous polymer substrate by using compressed air.

The gravure coating process includes transferring a coating solution through a small well or cell engraved on the surface of a cylinder.

The DM coating (direct metering coating) process includes transferring a coating solution through a small well or cell engraved on the surface of a cylinder by using a DM coater.

Herein, the solvent for pore impregnation may be the same as the organic solvent contained in the slurry for forming a porous coating layer. Otherwise, the solvent for pore impregnation may be miscible with the binder polymer in the slurry for forming a porous coating layer and have a low boiling point. Particularly, the solvent for pore impregnation may have a boiling point lower than the melting point of the porous polymer substrate.

For example, the solvent for pore impregnation may have a boiling point of 10°C or higher, 20°C or higher, 30°C or higher, or 40°C or higher, and 300°C or lower, 250°C or lower, 200°C, or 150°C or lower. When the boiling point of the solvent for pore impregnation is within the above-defined range, it is possible to prevent the problem of earlier evaporation of the solvent in advance to the application of the slurry. In addition, there is an advantage in that the boiling point of the solvent for pore impregnation is not higher than the melting point of the porous polymer substrate to provide a high drying rate.

According to an embodiment of the present disclosure, the solvent for pore impregnation may vary depending on the porous polymer substrate used herein. For example, when the porous polymer substate is a polyolefin-based porous polymer film, the solvent for pore impregnation may have a boiling point of 30°C or higher, or 40°C or higher, and 150°C or lower, or 130°C or lower. Non-limiting examples of the solvent include acetone, methyl ethyl ketone, tetrahydrofuran (THF), methyl isobutyl ketone, or two or more of them.

According to an embodiment of the present disclosure, when the porous polymer substrate is a porous nonwoven web substrate, such as polyethylene terephthalate, the solvent for pore impregnation may have a boiling point of 30°C or higher, or 40°C or higher, and 260°C or lower, or 230°C or lower. Non-limiting examples of the solvent include acetone, methyl ethyl ketone, tetrahydrofuran, methyl isobutyl ketone, dimethyl sulfoxide, 1-methyl2-pyrrolidone, dimethyl formamide, or two or more of them.

Next, slurry for forming a porous coating layer, including inorganic particles, an organic solvent and a binder polymer soluble in the organic solvent, is applied onto the other surface of the porous polymer substrate (S2). Herein, the term 'the other surface' refers to the remaining surface of the porous polymer substrate, not coated with the solvent for pore impregnation in step (S1). The surface of the porous polymer substrate coated with the solvent for pore impregnation requires time during which the excessive solvent remaining on the surface is dried. In addition, when the slurry for forming a porous coating layer is applied immediately onto the surface of the porous polymer substrate coated with the solvent for pore impregnation, the slurry concentration may be changed due to the excessive solvent remaining on the surface after pore impregnation. Therefore, in step (S2) after step (S1), the slurry for forming a porous coating layer is applied onto the other surface of the porous polymer substrate, not coated with the solvent for pore impregnation.

Herein, the slurry for forming a porous coating layer is applied through a sequential coating process. Particularly, a single-side coating process favorable to sequential coating may be used. For example, the slurry for forming a porous coating layer may be applied by using a slot die coater, a spray coater, a gravure roll coater, or a direct metering (DM) coater.

Reference will be made to the above description about the inorganic particles and the binder polymer.

The organic solvent used for the porous coating layer according to the present disclosure preferably has a solubility parameter similar to the solubility parameter of the binder polymer to be used and has a low boiling point. This is because such a solvent facilitates homogeneous mixing and the subsequent solvent removal. Non-limiting examples of the solvent that may be used include any one selected from acetone, tetrahydrofuran, methylene chloride, chloroform, dimethyl formamide, N-methyl-2-pyrrolidone, methyl ethyl ketone and cyclohexane, or a mixture of two or more of them.

Besides the inorganic particles and binder polymer, the slurry for forming a porous coating layer may further include a dispersing agent and other additives.

Herein, the slurry for forming a porous coating layer may be prepared by dissolving the binder polymer in an organic solvent, adding inorganic particles thereto and dispersing the inorganic particles therein. The inorganic particles may be added after they are pulverized in advance to a predetermined average particle diameter. Otherwise, the inorganic particles may be added to a binder polymer solution, and then pulverized and dispersed, while controlling them to have a predetermined diameter by using a ball milling process, or the like.

Herein, the slurry for forming a porous coating layer may have a solid content (content of the solute free from the solvent) of 30 wt% or less based on 100 wt% of the slurry, preferably. Particularly, the solid content may be 10-30 wt%, or 15-25 wt%, preferably. Within the above-defined range, it is possible to reduce a deviation in physical properties between the first porous coating layer and the second porous coating layer. As the solid content is increased, the absolute amount of the binder infiltrating into the pores is increased when the same volume of the binder solution in the slurry infiltrates into the pores, and thus the two surfaces show an increased deviation in physical properties. Therefore, it is important to apply the lowest solid content. When the solid content is excessively low, it is not possible to carry out coating to a desired coating thickness. In addition, as the solid content is decreased, the deviation in physical properties may be reduced. However, when the solid content is excessively low, it is not possible to obtain a heat shrinkage, adhesion (Lami strength) to an electrode and adhesion (peel strength) between a porous polymer substrate and a porous coating layer to a level equivalent or similar to those according to the related art. Meanwhile, when the solid content is within the above-defined range, it is possible to obtain a thick coating layer.

Next, the slurry for forming a porous coating layer is applied onto one surface of the porous polymer substrate (S3).

Herein, the term 'one surface' refers to the surface of the porous polymer substrate coated with the solvent for pore impregnation in step (S1), i.e. the surface different from the surface coated with the slurry for forming a porous coating layer in step (S2).

The slurry for forming a porous coating layer is the same as the slurry for forming a porous coating layer used in step (S2). Therefore, the obtained separator may show a reduced deviation in physical properties between the first porous coating layer and the second porous coating layer formed on both surfaces of the porous polymer substrate.

Herein, step (S2) and step (S3) are carried out with a time interval. This is because the present disclosure intends to solve the problem occurring in the sequential coating process.

Then, the product obtained from step (S3) is dried (S4). In this manner, the separator may be provided with the first porous coating layer on one surface of the porous polymer substrate and the second porous coating layer on the other surface of the porous polymer substrate.

Step (S4) may be carried out by drying both the solvent for pore impregnation and the organic solvent.

The porous separator according to an embodiment of the present disclosure is used for a lithium-ion secondary battery. The lithium-ion secondary battery includes a separator which interrupts a positive electrode physically from a negative electrode to prevent an internal short-circuit. In addition, the lithium-ion secondary battery has a structure in which a liquid electrolyte is injected into the pores formed in the separator, and lithium ions are transported through the liquid electrolyte. Therefore, the porous separator for a lithium-ion secondary battery according to an embodiment of the present disclosure should have pores in the separator to provide a high ion conductivity and low resistance.

According to an embodiment of the present disclosure, after carrying out step (S4), both the solvent for pore impregnation and the organic solvent are dried to form pores in the resultant separator.

Meanwhile, in the method according to an embodiment of the present disclosure, drying is carried out in step (S4) for the first time. When a drying step is carried out after step (S1) or step (S2), the solvent for pore impregnation or the organic solvent in the slurry for forming the first porous coating layer is dried, and thus the technical problem of the present disclosure cannot be solved.

The porous coating layer is dried by using a dryer, such as an oven. For example, the drying step may be carried out at a temperature of 30-200°C for 5 minutes or more, particularly 1 hour or more and 24 hours or less.

Meanwhile, according to an embodiment of the present disclosure, the porous coating layer is dried under a humidified condition. For example, the porous coating layer is dried under a relative humidity of 20% or more, 30% or more, 35% or more, or 40% or more, and 80% or less, 75% or less, or 70% or less.

In this manner, in the porous coating layer, the inorganic particles are bound to one another by the binder polymer, while they are packed and are in contact with each other, thereby forming interstitial volumes among the inorganic particles, and the interstitial volumes among the inorganic particles become vacant spaces to form pores.

In other words, the binder polymer attaches the inorganic particles to one another so that they may retain their binding states. For example, the binder polymer connects the inorganic particles with one another and fixes them. In addition, the pores of the porous coating layer are those formed by the interstitial volumes among the inorganic particles which become vacant spaces. The spaces may be defined by the inorganic particles facing each other substantially in a closely packed or densely packed structure of the inorganic particles.

In still another aspect of the present disclosure, there is provided a separator coating apparatus for carrying out the above-described method for manufacturing a separator.

Particularly, the apparatus for manufacturing a separator includes:

(a) a porous polymer substrate-supplying roll configured to supply a porous polymer substrate;
(b) a solvent for pore impregnation-applying unit configured to apply a solvent for pore impregnation onto one surface of the porous polymer substrate;
(c) a first coating unit configured to apply slurry for forming a porous coating layer onto the other surface of the porous polymer substrate;
(d) a second coating unit configured to apply slurry for forming a porous coating layer onto the surface of the porous polymer substrate mentioned in (b);
(e) two or more rotating rollers configured to transport the separator by frictional force, while they are in contact with at least one surface of the porous polymer substrate; and
(f) a drying unit configured to dry the porous polymer substrate with two porous coating layers coated on both surfaces thereof.

When both surfaces of the porous polymer substrate are coated sequentially by using the apparatus and then dried, it is possible to reduce a deviation in physical properties between the first porous coating layer and the second porous coating layer.

FIG. 2 is a schematic view illustrating the apparatus for manufacturing a separator for a lithium secondary battery according to an embodiment of the present disclosure. Referring to FIG. 2, the apparatus 200 for manufacturing a separator for a lithium secondary battery according to an embodiment of the present disclosure includes a porous polymer substrate-supplying roll 110, a first coating unit 120, a second coating unit 130, a rotating roller 140, a drying unit 150 and a solvent for pore impregnation-applying unit 160.

The porous polymer substrate-supplying roll 110 supplies a porous polymer substrate continuously to the solvent for pore impregnation-applying unit 160.

The solvent for pore impregnation-applying unit 160 applies the solvent for pore impregnation to one surface of the porous polymer substrate 10 supplied from the porous polymer substrate-supplying roll 110.

Each of the first coating unit 120 and the second coating unit 130 applies the slurry for forming a porous coating layer onto the porous polymer substrate 10 through a single-side coating process.

The rotating roller 140 can transport the porous polymer substrate coated with the slurry for forming a porous coating layer on one surface by frictional force, while being in contact with at least one surface of the porous polymer substrate.

The drying unit 150 dries the organic solvent contained in the slurry for forming a porous coating layer applied to both surfaces of the porous polymer substrate under a humidified condition so that porous coating layers including a plurality of pores may be formed on both surfaces of the porous polymer substrate. In addition, the drying unit 150 dries the solvent for pore impregnation to form pores in the porous polymer substrate.

In still another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Comparative Example 1**

First, polyvinylidene fluoride as a binder polymer was introduced to acetone as a solvent and dissolved therein at 50°C for about 4 hours to prepare a binder polymer solution. Next, aluminum hydroxide ($Al(OH)_3$) (particle size: 500 nm) as inorganic particles was introduced to the binder polymer solution. Herein, the weight ratio of the inorganic particles : binder polymer was controlled to 70 : 30 to prepare slurry for forming a porous coating layer. In addition, the solid content in the slurry (solid content free from the solvent in the slurry) was 30 wt% based on 100 wt% of the slurry.

The slurry for forming a porous coating layer was applied to one surface of a polyethylene porous film (porosity: 35%) having a thickness of 9 μm through a direct metering (DM) coating process among the horizontal coater processes at a rate of 120 m/min. Then, the slurry for forming a porous coating layer was applied to the other surface of the porous polymer substrate, not coated with the slurry for forming a porous coating layer, at a rate of 120 m/min. After that, the porous polymer substrate coated with the slurry for forming a porous coating layer on both surfaces thereof was dried at a temperature of 50°C under a relative humidity of 40% to obtain a separator having a first porous coating layer and a second coating layer on each of both surfaces thereof. The test results are shown in the following Table 1.

**Example 1**

First, acetone as a solvent for pore impregnation was applied to one surface of a polyethylene porous film (porosity: 35%) having a thickness of 9 μm through a direct metering (DM) coating process among the horizontal coater processes at a rate of 120 m/min.

Next, the slurry as described hereinafter was applied to the other surface of the porous polymer substate through a DM coating process among the horizontal coater processes at a rate of 120 m/min. The slurry was prepared as follows. Polyvinylidene fluoride as a binder polymer was introduced to acetone as a solvent and dissolved therein at 50°C for about 4 hours to prepare a binder polymer solution. Next, aluminum hydroxide ($Al(OH)_3$) (particle size: 500 nm) as inorganic particles was introduced to the binder polymer solution. Herein, the weight ratio of the inorganic particles : binder polymer was controlled to 70 : 30 to prepare slurry for forming a porous coating layer. In addition, the solid content in the slurry (solid content free from the solvent in the slurry) was 30 wt% based on 100 wt% of the slurry.

Then, the slurry was applied to the above-mentioned one surface of the porous polymer substate through a slot die coating process among the horizontal coater processes at a rate of 120 m/min.

After that, the porous polymer substrate coated with the slurry for forming a porous coating layer on both surfaces thereof was dried at a temperature of 50°C under a relative humidity of 40% to obtain a separator having a first porous coating layer and a second coating layer on each of both surfaces thereof. The test results are shown in the following Table 1.

**Examples 2-5**

The separators were obtained in the same manner as Example 1, except that the solid content in the slurry was controlled to 25 wt%, 20 wt%, 15 wt% and 10 wt%, instead of 30 wt%. The test results are shown in the following Table 1.

[Table 1]

| | | | Comp. Ex. 1 | Ex. 1 | Ex. 2 | Ex. 3 | Ex. 4 | Ex. 5 |
|---|---|---|---|---|---|---|---|---|
| | Solid content | | 30 wt% | 30 wt% | 25 wt% | 20 wt% | 15 wt% | 10 wt% |
| Physical properties of coated separator | Thickness | $\mu$m | 18.1 | 18.2 | 18.0 | 18.1 | 17.8 | 15.2 |
| | Air permeability (Gurley value) | s/100cc | 352 | 337 | 329 | 297 | 285 | 244 |
| | Slurry loading amount | g/m$^2$ | 14.2 | 14.2 | 14.1 | 14.3 | 13.8 | 10.2 |
| | Heat shrinkage (150°C, 30min) | MD | % | 5.8 | 6.6 | 6.4 | 6.7 | 7.4 | 9.8 |
| | | TD | | 6.3 | 6.2 | 6.9 | 6.6 | 8.6 | 12.4 |
| | Adhesion (peel strength) between porous polymer substrate and porous coating layer | First porous coating layer | gf/15mm | 60 | 190 | 224 | 231 | 228 | 204 |
| | | Second porous coating layer | | 222 | 264 | 253 | 249 | 231 | 214 |
| | | Deviation in physical property between first porous coating layer and second porous coating layer | | 162 | 74 | 29 | 18 | 3 | 10 |
| | Adhesion (lamination Strength) between separator and electrode | First porous coating layer | gf/25mm | 30 | 67 | 73 | 86 | 89 | 74 |
| | | Second porous coating layer | | 85 | 98 | 94 | 97 | 95 | 79 |
| | | Deviation in physical property between first porous coating layer and second porous coating layer | | 55 | 31 | 21 | 11 | 6 | 5 |

As can be seen from Table 1, when comparing Comparative Example 1 with Examples 1-5, the separators show equivalent or similar values in terms of air permeability, heat shrinkage, adhesion between the porous polymer substate and the porous coating layer, and adhesion between the separator and the electrode. However, referring to the values corresponding to the deviations in physical properties in terms of the adhesion between the porous polymer substrate and the porous coating layers and the adhesion between the separator and the electrode, Comparative 1 shows a deviation in physical properties of approximately up to 50 times. On the contrary, Examples 1-5 show a small deviation in physical properties between the first porous coating layer and the second porous coating layer.

Meanwhile, it can be seen from Examples 1-5 that a lower solid content provides a smaller deviation in physical properties.

**1) Method for Determining Thickness**

The thickness of each of the separators according to Comparative Example 1 and Examples 1-5 was determined by using a thickness gauge (Mitutoyo Co., VL-50S-B).

### 2) Method for Determining Air Permeability

The air permeability of each of the separators according to Comparative Example 1 and Examples 1-5 was determined by using a Gurley type air permeability tester according to JIS P-8117. Herein, the air permeability was determined as time required for 100 cc of air to pass through a diameter of 28.6 mm and an area of 645 mm$^2$.

### 3) Method for Determining Heat Shrinkage

The heat shrinkage of each of the separators according to Comparative Example 1 and Examples 1-5 was calculated by using the formula of (Initial length - Length after heat shrinking at 150°C for 30 minutes) / (Initial length) X 100.

### 4) Determination of Adhesion (Peel Strength) between Porous Polymer Substrate and Porous Coating Layer

Each of the separators according to Comparative Example 1 and Examples 1-5 was cut into a size of 15 mm X 100 mm. A double-sided adhesive tape was attached to a glass plate, and the porous coating layer surface of the separator was attached to the adhesive tape. Then, the end portion of the separator was mounted to a UTM instrument (LLOYD Instrument LF Plus), and force was applied at 180° and a rate of 300 mm/min. The force required for separating the porous coating layer from the porous polymer substrate was measured.

### 5) Determination of Adhesion (Lami Strength) between Electrode and Separator

A negative electrode was obtained as described hereinafter and cut into a size of 25 mm x 100 mm. Each of the separators according to Comparative Example 1 and Examples 1-5 was cut into a size of 25 mm x 100 mm. The prepared separator was stacked with the negative electrode, and the stack was inserted between PET films having a thickness of 100 $\mu$m and adhered by using a flat press. Herein, the flat press was heated and pressurized at 60°C under a pressure of 6.5 MPa for 1 second. The adhered separator and negative electrode were attached to slide glass by using a double-sided tape. The end portion (10 mm or less from the end of the adhered surface) of the separator was peeled off and attached to a 25 mm x 100 mm PET film by using a single-sided tape so that they might be connected in the longitudinal direction. Then, the slide glass was mounted to the lower holder of a UTM instrument (LLOYD Instrument LF Plus), and the PET film adhered to the separator was mounted to the lower holder of the UTM instrument. Then, force was applied at 180° and a rate of 300 mm/min. The force required for separating the negative electrode from the porous coating layer facing the negative electrode was measured.
Herein, the negative electrode was prepared as follows. First, artificial graphite, carbon black, carboxymethyl cellulose (CMC) and a binder were mixed with water at a weight ratio of 95.8:1:1:2.2 to obtain negative electrode slurry. The negative electrode slurry was coated on copper (Cu) foil to a thickness of 50 $\mu$m to form a thin electrode plate, which, in turn, was dried at 135°C for 3 hours or more, and then pressed to obtain the negative electrode.

[Description of Drawing Numerals]

    100: Conventional apparatus for manufacturing separator
    200: Apparatus for manufacturing separator according to the present disclosure
    110: Porous polymer substrate-supplying roll
    120: First coating unit
    130: Second coating unit
    140: Rotating roller
    150: Drying unit
    160: Solvent for pore impregnation-applying unit
    170: Separator winding roll
    10: Porous polymer substrate
    20: Separator

## Claims

**1.**    A method for manufacturing a porous separator for a lithium secondary battery, comprising the steps of:

(S1) applying a solvent for pore impregnation onto one surface of a porous polymer substrate;

(S2) applying slurry for forming a porous coating layer, comprising inorganic particles, an organic solvent and a binder polymer soluble in the organic solvent, onto the other surface of the porous polymer substrate;

(S3) applying slurry for forming a porous coating layer onto the surface of the porous substrate mentioned in step (S1); wherein step (S2) and step (S3) are carried out sequentially with a time interval; and

(S4) drying the product of step (S3) to obtain a porous separator provided with a first porous coating layer on one surface of the porous polymer substrate and a second porous coating layer on the other surface of the porous polymer substrate;

the porous separator for a lithium secondary battery comprises:

a porous polymer substrate;

a first porous coating layer formed on one surface of the porous polymer substrate and comprising inorganic particles and a binder polymer; and

a second porous coating layer formed on the other surface of the porous polymer substrate and comprising the inorganic particles and the binder polymer,

wherein the first porous coating layer and the second porous coating layer show a deviation in physical property of $\pm 65.38$ N/m ($\pm 100$ gf/15 mm) in terms of peel strength as determined according to the description, and

the first porous coating layer and the second porous coating layer show a deviation in physical property of $\pm 19.61$ N/m (50 gf/25 mm) in terms of lamination strength as determined according to the description.

2. The method for manufacturing the porous separator according to claim 1, wherein the applying step is carried out through a single-side coating process.

3. The method for manufacturing the porous separator according to claim 1, wherein the solvent for pore impregnation is the same as the organic solvent, or is miscible with the binder polymer and has a low boiling point.

4. The method for manufacturing the porous separator according to claim 1, wherein the solvent for pore impregnation has a boiling point lower than the melting point of the porous polymer substrate.

5. The method for manufacturing the porous separator according to claim 4, wherein the solvent for pore impregnation has a boiling point of 10°C or higher and 300°C or lower.

6. The method for manufacturing the porous separator according to claim 4, wherein the solvent for pore impregnation comprises acetone, methyl ethyl ketone, tetrahydrofuran, methyl isobutyl ketone, dimethyl sulfoxide, 1-methyl-2-pyrrolidone, dimethyl formamide, or two or more of them.

7. The method for manufacturing the porous separator according to claim 1, wherein the organic solvent comprises any one compound selected from acetone, tetrahydrofuran, methylene chloride, chloroform, dimethyl formamide, N-methyl-2-pyrrolidone, methyl ethyl ketone and cyclohexane, or a mixture of two or more of them.

8. The method for manufacturing the porous separator according to claim 1, wherein step (S1) comprises applying the solvent for pore impregnation to the inside of the pores of the porous polymer substrate.

9. The method for manufacturing the porous separator according to claim 1, wherein step (S4) comprises drying the solvent for pore impregnation and the organic solvent.

10. The method for manufacturing the porous separator according to claim 1, wherein the solid content (content of the solute free from the solvent) in the slurry for forming a porous coating layer is 30 wt% or less based on 100 wt% of the slurry for forming a porous coating layer.

11. The method for manufacturing the porous separator according to claim 1, wherein each of the drying steps is carried out independently under a relative humidity of 20-80%.

12. The method for manufacturing the porous separator according to claim 1, wherein the slurry for forming a porous coating layer in step (S2) has the same composition as the composition of the slurry for forming a porous coating layer in step (S3).

**13.** A separator coating apparatus for carrying out the method for manufacturing the separator as defined in any one of claims 1 to 12, comprising:

(a) a porous polymer substrate-supplying roll configured to supply a porous polymer substrate;
(b) a solvent for pore impregnation-applying unit configured to apply a solvent for pore impregnation onto one surface of the porous polymer substrate;
(c) a first coating unit configured to apply slurry for forming a porous coating layer onto the other surface of the porous polymer substrate;
(d) a second coating unit configured to apply slurry for forming a porous coating layer onto the surface of the porous polymer substrate mentioned in (b);
(e) two or more rotating rollers configured to transport the separator by frictional force, while they are in contact with at least one surface of the porous polymer substrate; and
(f) a drying unit configured to dry the porous polymer substrate with two porous coating layers coated on both surfaces thereof.

**Patentansprüche**

**1.** Verfahren zur Herstellung eines porösen Separators für eine Lithiumsekundärbatterie, umfassend die folgenden Schritte:

(S1) das Auftragen eines Lösungsmittels zur Porenimprägnierung auf eine Oberfläche eines porösen Polymersubstrats;
(S2) das Auftragen einer Aufschlämmung zur Ausbildung einer porösen Beschichtung, umfassend anorganische Teilen, ein organisches Lösungsmittel und ein Bindemittelpolymer, das im organischen Lösungsmittel löslich ist, auf die andere Oberfläche des porösen Polymersubstrats;
(S3) das Auftragen einer Aufschlämmung zur Ausbildung einer porösen Beschichtung auf die Oberfläche des in Schritt (S1) genannten porösen Substrats; worin die Schritte (S2) und (S3) nacheinander mit einem Zeitintervall durchgeführt werden; und
(S4) das Trocknen des Produkts von Schritt (S3), um einen porösen Separator zu erhalten, der mit einer ersten porösen Beschichtung auf einer Oberfläche des porösen Polymersubstrats und einer zweiten Beschichtung auf der anderen Oberfläche des porösen Polymersubstrats ausgestattet ist;
wobei der poröse Separator für eine Lithiumsekundärbatterie umfasst:

ein poröses Polymersubstrat;
eine erste poröse Beschichtung, die auf einer Oberfläche des porösen Polymersubstrats ausgebildet ist und anorganische Teilchen und ein Bindemittelpolymer umfasst; und
eine zweite poröse Beschichtung, die auf der anderen Oberfläche des porösen Polymersubstrats ausgebildet ist und anorganische Teilchen und ein Bindemittelpolymer umfasst,
worin die erste poröse Beschichtung und die zweite poröse Beschichtung eine Abweichung der physikalischen Eigenschaft in Bezug auf die Schälfestigkeit, bestimmt gemäß der Beschreibung, von $\pm 65{,}38$ N/m ($\pm 100$ gf/15 mm) aufweisen und
die erste poröse Beschichtung und die zweite poröse Beschichtung eine Abweichung der physikalischen Eigenschaft in Bezug auf die Laminierungsstärke, bestimmt gemäß der Beschreibung, von $\pm 19{,}61$ N/m (50 gf/25 mm) aufweisen.

**2.** Verfahren zur Herstellung des porösen Separators gemäß Anspruch 1, worin der Schritt des Auftragens mittels eines einseitigen Beschichtungsverfahrens durchgeführt wird.

**3.** Verfahren zur Herstellung des porösen Separators gemäß Anspruch 1, worin das Lösungsmittel für die Porenimprägnierung dasselbe ist wie das organische Lösungsmittel oder mit dem Bindemittelpolymer mischbar ist und einen niedrigen Siedepunkt aufweist.

**4.** Verfahren zur Herstellung des porösen Separators gemäß Anspruch 1, worin das Lösungsmittel zur Porenimprägnierung einen Siedepunkt aufweist, der niedriger ist als der Schmelzpunkt des porösen Polymersubstrats.

**5.** Verfahren zur Herstellung des porösen Separators gemäß Anspruch 4, worin das Lösungsmittel zur Porenimprägnierung einen Siedepunkt von 10°C oder höher und 300°C oder niedriger aufweist.

6. Verfahren zur Herstellung des porösen Separators gemäß Anspruch 4, worin das Lösungsmittel zur Porenimprägnierung Aceton, Methylethylketon, Tetrahydrofuran, Methylisobutylketon, Dimethylsulfoxid, 1-Methyl-2-pyrrolidon, Dimethylformamid oder zwei oder mehrere davon umfasst.

7. Verfahren zur Herstellung des porösen Separators gemäß Anspruch 1, worin das organische Lösungsmittel irgendeine Verbindung, ausgewählt aus Aceton, Tetrahydrofuran, Methylenchlorid, Chloroform, Dimethylformamid, N-Methyl-2-pyrrolidon, Methylethylketon und Cyclohexan, oder ein Gemisch aus zwei oder mehreren davon umfasst.

8. Verfahren zur Herstellung des porösen Separators gemäß Anspruch 1, worin Schritt (S1) das Auftragen des Lösungsmittels zur Porenimprägnierung an der Innenseite der Poren des porösen Polymersubstrats umfasst.

9. Verfahren zur Herstellung des porösen Separators gemäß Anspruch 1, worin Schritt (S4) das Trocknen des Lösungsmittels zur Porenimprägnierung und des organischen Lösungsmittels umfasst.

10. Verfahren zur Herstellung des porösen Separators gemäß Anspruch 1, worin der Feststoffgehalt (Gehalt an gelöstem Stoff, frei vom Lösungsmittel) in der Aufschlämmung zur Ausbildung einer porösen Beschichtung 30 Gew.-% oder weniger, bezogen auf 100 Gew.-% der Aufschlämmung zur Ausbildung einer porösen Beschichtung, beträgt.

11. Verfahren zur Herstellung des porösen Separators gemäß Anspruch 1, worin jeder der Schritte des Trocknens unabhängig bei einer relativen Feuchtigkeit von 20-80% durchgeführt wird.

12. Verfahren zur Herstellung des porösen Separators gemäß Anspruch 1, worin die Aufschlämmung zur Ausbildung einer porösen Beschichtung in Schritt (S2) die gleiche Zusammensetzung hat wie die Zusammensetzung der Aufschlämmung zur Ausbildung einer porösen Beschichtung in Schritt (S3).

13. Vorrichtung zur Beschichtung eines Separators zum Ausführen des Verfahrens zur Herstellung des porösen Separators wie in einem der Ansprüche 1 bis 12 definiert, umfassend:

(a) eine Rolle zur Bereitstellung eines porösen Polymersubstrats, die dazu ausgelegt ist, ein poröses Polymersubstrat zuzuführen;
(b) eine Auftragseinheit für ein Lösungsmittel zur Porenimprägnierung, die dazu ausgelegt ist, ein Lösungsmittel zur Porenimprägnierung auf eine Oberfläche des porösen Polymersubstrats aufzutragen;
(c) eine erste Beschichtungseinheit, die dazu ausgelegt ist, eine Aufschlämmung zur Ausbildung einer porösen Beschichtung auf die andere Oberfläche des porösen Polymersubstrats aufzubringen;
(d) eine zweite Beschichtungseinheit, die dazu ausgelegt ist, eine Aufschlämmung zur Ausbildung einer porösen Beschichtung auf die in (b) genannte Oberfläche des porösen Polymersubstrats aufzubringen;
(e) zwei oder mehr rotierende Walzen, die dazu ausgelegt sind, den Separator durch Reibungskraft zu transportieren, während sie mit mindestens einer Oberfläche des porösen Polymersubstrats in Kontakt stehen; und
(f) eine Trocknungseinheit, die dazu ausgelegt ist, das poröse Polymersubstrat mit zwei auf beiden Oberflächen beschichteten porösen Beschichtungen zu trocknen.

**Revendications**

1. Procédé destiné à fabriquer un séparateur poreux pour une batterie secondaire au lithium, comprenant les étapes suivantes :

(S1) appliquer un solvant d'imprégnation des pores sur une surface d'un substrat polymère poreux ;
(S2) appliquer une suspension destinée à former une couche de revêtement poreuse, comprenant des particules inorganiques, un solvant organique et un polymère liant soluble dans le solvant organique, sur l'autre surface du substrat polymère poreux ;
(S3) appliquer une suspension destinée à former une couche de revêtement poreuse sur la surface du substrat poreux mentionnée à l'étape (S1) ; dans lequel l'étape (S2) et l'étape (S3) sont mises en œuvre séquentiellement avec un intervalle de temps ; et
(S4) sécher le produit de l'étape (S3) pour obtenir un séparateur poreux muni d'une première couche de revêtement poreuse sur une surface du substrat polymère poreux et d'une seconde couche de revêtement poreuse sur l'autre surface du substrat polymère poreux ;

le séparateur poreux pour une batterie secondaire au lithium comprend :

un substrat polymère poreux ;

une première couche de revêtement poreuse formée sur une surface du substrat polymère poreux et comprenant des particules inorganiques et un polymère liant ; et

une seconde couche de revêtement poreuse formée sur l'autre surface du substrat polymère poreux et comprenant les particules inorganiques et le polymère liant,

dans lequel la première couche de revêtement poreuse et la seconde couche de revêtement poreuse présentent un écart de propriété physique de $\pm$ 65,38 N/m ($\pm$ 100 gf/15 mm) en termes de résistance au pelage tel que déterminé selon la description, et

la première couche de revêtement poreuse et la seconde couche de revêtement poreuse présentent un écart de propriété physique de + 19,61 N/m (50 gf/25 mm) en termes de résistance au laminage tel que déterminé selon la description.

2. Procédé de fabrication du séparateur poreux selon la revendication 1, dans lequel l'étape d'application est mise en œuvre à l'aide d'un processus de revêtement sur une seule face.

3. Procédé de fabrication du séparateur poreux selon la revendication 1, dans lequel le solvant d'imprégnation des pores est identique au solvant organique, ou est miscible avec le polymère liant et présente un point d'ébullition bas.

4. Procédé de fabrication du séparateur poreux selon la revendication 1, dans lequel le solvant d'imprégnation des pores présente un point d'ébullition inférieur au point de fusion du substrat polymère poreux.

5. Procédé de fabrication du séparateur poreux selon la revendication 4, dans lequel le solvant d'imprégnation des pores présente un point d'ébullition de 10 °C ou plus et de 300 °C ou moins.

6. Procédé de fabrication du séparateur poreux selon la revendication 4, dans lequel le solvant d'imprégnation des pores comprend de l'acétone, de la méthyl éthyl cétone, du tétrahydrofurane, de la méthyl isobutyl cétone, du sulfoxyde de diméthyle, de la 1-méthyl-2-pyrrolidone, du diméthyl formamide, ou deux de ceux-ci ou plus.

7. Procédé de fabrication du séparateur poreux selon la revendication 1, dans lequel le solvant organique comprend un composé quelconque sélectionné parmi l'acétone, le tétrahydrofurane, le chlorure de méthylène, le chloroforme, le diméthyl formamide, la N-méthyl-2-pyrrolidone, la méthyl éthyl cétone et le cyclohexane, ou un mélange de deux de ceux-ci ou plus.

8. Procédé de fabrication du séparateur poreux selon la revendication 1, dans lequel l'étape (S1) comprend l'application du solvant d'imprégnation des pores à l'intérieur des pores du substrat polymère poreux.

9. Procédé de fabrication du séparateur poreux selon la revendication 1, dans lequel l'étape (S4) comprend le séchage du solvant d'imprégnation des pores et du solvant organique.

10. Procédé de fabrication du séparateur poreux selon la revendication 1, dans lequel la teneur en solides (teneur du soluté exempt de solvant) dans la suspension destinée à former une couche de revêtement poreuse est de 30 % en poids ou moins sur la base de 100 % en poids de la suspension destinée à former une couche de revêtement poreuse.

11. Procédé de fabrication du séparateur poreux selon la revendication 1, dans lequel chacune des étapes de séchage est mise en œuvre indépendamment sous une humidité relative de 20 à 80 %.

12. Procédé de fabrication du séparateur poreux selon la revendication 1,

dans lequel la suspension destinée à former une couche de revêtement poreuse de l'étape (S2) présente la même composition que la composition de la suspension destinée à former une couche de revêtement poreuse de l'étape (S3).

13. Appareil de revêtement de séparateur destiné à mettre en œuvre le procédé de fabrication du séparateur tel que défini selon l'une quelconque des revendications 1 à 12, comprenant :

(a) un rouleau d'alimentation en substrat polymère poreux configuré pour alimenter un substrat polymère poreux ;

(b) une unité d'application de solvant d'imprégnation des pores configurée pour appliquer un solvant d'imprégnation des pores sur une surface du substrat polymère poreux ;

(c) une première unité de revêtement configurée pour appliquer une suspension destinée à former une couche de revêtement poreuse sur l'autre surface du substrat polymère poreux ;

(d) une seconde unité de revêtement configurée pour appliquer une suspension destinée à former une couche de revêtement poreuse sur la surface du substrat polymère poreux mentionnée en (b) ;

(e) deux rouleaux rotatifs ou plus configurés pour transporter le séparateur par force de friction, tandis qu'ils sont en contact avec au moins une surface du substrat polymère poreux ;

et

(f) une unité de séchage configurée pour sécher le substrat polymère poreux avec deux couches de revêtement poreuses revêtues sur les deux surfaces de celui-ci.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200081079
- US 20150380702 A1
- US 20130287937 A1
- EP 3457461 A1